# EUROPEAN PATENT APPLICATION

(11) **EP 4 376 117 A1**
(43) Date of publication of application: **29.05.2024**
(21) Application number: 23156088.9
(22) Date of filing: 10.02.2023
(51) Int. Cl.: H01M 4/133, H01M 4/62, H01M 10/052, H01M 4/02

(54) **NEGATIVE ELECTRODE SHEET AND BATTERY USING THE SAME**

(30) Priority: 28.11.2022 CN 202211496644
(71) Applicant: CALB Technology (Shenzhen) Co. Ltd., Futian District, Shenzhen Guangdong 518000 (CN); CALB Co., Ltd., Changzhou City, Jiangsu Province (CN)
(72) Inventor: ZHANG, Xin, Changzhou City, Jiangsu Province (CN); SHEN, Taotao, Changzhou City, Jiangsu Province (CN); QIAO, Zhi, Changzhou City, Jiangsu Province (CN)
(74) Representative: Becker, Eberhard

(57) **Abstract**

The disclosure provides a negative electrode sheet and a battery using the same. The negative electrode sheet provided in the disclosure includes a current collector and a negative electrode active coating arranged on the surface of the current collector. The negative electrode active coating contains polyethylene glycol, the molecular weight of polyethylene glycol is 150-660, and the proportion of polyethylene glycol in the negative electrode active coating is not less than 0.2% calculated by mass percentage. The polyethylene glycol in the negative electrode active coating is able to absorb the electrolyte and swell, thereby increasing the transport rate of ions in the electrode sheet, reducing the liquid-phase transport impedance of thick electrodes, and improving the kinetic performance. The DCR value of the battery using the negative electrode sheet is reduced, so the battery using the negative electrode sheet has both good fast charging performance and battery cycle performance.

## Description

### BACKGROUND

### Technical Field

The disclosure belongs to the technical field of batteries, and in particular relates to a negative electrode sheet and a battery using the same.

### Description of Related Art

It is anticipated that the installed capacity of power batteries will reach 1161GWh in 2025, an increase of 735% compared with 2020. As a key material in the battery industry, negative electrode materials involve consumer batteries, power batteries, energy storage batteries and energy storage power stations. At present, artificial graphite and natural graphite are the main negative electrode materials for lithium-ion batteries. The layer spacing (about 0.335 nm) of graphite anode is small, which cannot provide enough spacious intercalation channels for lithium ions, and the diffusion method is two-dimensional interlayer diffusion. Under such circumstances, it is difficult to make improvement in performance and achieve fast charging and discharging.

### SUMMARY

In order to optimize the fast charging performance of the battery, the present disclosure provides a negative electrode sheet and a battery using the same.

According to an aspect of the present disclosure, a negative electrode sheet is provided, which includes a current collector and a negative electrode active coating arranged on the surface of the current collector. The negative electrode active coating contains polyethylene glycol, the molecular weight of polyethylene glycol is 150~660, and the proportion of polyethylene glycol in the negative electrode active coating is not less than 0.2% calculated by mass percentage. In the negative electrode sheet provided by the present disclosure, the polyethylene glycol in the negative electrode active coating is able to absorb the electrolyte and swell, thereby effectively improving the absorption and storage effect of the negative electrode sheet on the electrolyte, thereby reducing the liquid-phase transport impedance of thick electrodes, and improving the kinetic performance of lithium ion transport. By limiting the molecular weight of polyethylene glycol added to the negative electrode active coating, on the one hand, it is possible to ensure that the negative electrode sheet has a sufficient liquid absorption and retention effect on the electrolyte, and on the other hand, it is possible to ensure that polyethylene glycol is able to be evenly distributed in the negative electrode active coating. When the molecular weight of polyethylene glycol is lower than 150, the liquid absorption and retention capacity of polyethylene glycol is insufficient. When the molecular weight of polyethylene glycol is high and greater than 660, it is difficult for polyethylene glycol to disperse in the negative electrode active coating, resulting in uneven distribution of the electrolyte in the negative electrode sheet, which hinders long-term cycle of the battery. In this scheme, the molecular weights of polyethylene glycol mentioned above all refer to the number average molecular weight of polyethylene glycol. On the other hand, adding polyethylene glycol to the negative electrode sheet may also bring a certain plasticizing effect, thereby improving the flexibility of the negative electrode sheet and optimizing the processing performance of the negative electrode sheet.

According to another aspect of the present disclosure, a battery is provided, which includes a positive electrode sheet and the above-mentioned negative electrode sheet.

The battery provided by the disclosure has both excellent fast charging performance and battery cycle performance, and the DCR value thereof is able to be kept at a low level.

### DESCRIPTION OF THE EMBODIMENTS

According to a first aspect of the present disclosure, a negative electrode sheet is provided, the negative electrode sheet includes a current collector and a negative electrode active coating arranged on the surface of the current collector. The negative electrode active coating contains polyethylene glycol, the molecular weight of polyethylene glycol is 150∼660, and the proportion of polyethylene glycol in the negative electrode active coating is not less than 0.2% calculated by mass percentage.

Preferably, the polyethylene glycol accounts for no more than 0.6% in the negative electrode active coating calculated by mass percentage.

Preferably, the polyethylene glycol accounts for 0.3%∼0.5% in the negative electrode active coating calculated by mass percentage.

Preferably, the molecular weight of polyethylene glycol is 180∼220.

Preferably, the negative electrode active coating further includes a binder, and a ratio of the binder: the polyethylene glycol is in a range of 5~7.5:1~3 calculated by mass ratio.

Preferably, the binder includes at least one of polyacrylic acid, polyimide, polyvinyl alcohol, polyacrylonitrile, polyurethane, styrene-butadiene latex, and sodium carboxymethyl cellulose.

Preferably, the binder includes styrene-butadiene latex and sodium carboxymethylcellulose.

Preferably, the negative electrode active coating further includes a negative electrode active material and a conductive agent. A ratio of the negative electrode active material: the conductive agent: the binder is in a range of 92~97:0.3~4.5:1.2~3.5 calculated by mass ratio.

Preferably, the thickness of the negative electrode sheet is 120 µm~450 µm.

According to another aspect of the present disclosure, there is provided a battery, which includes a positive electrode sheet and a negative electrode sheet as described above.

In order to enable those skilled in the art to better understand the present disclosure, the following will clearly and completely describe the technical solutions in the embodiments of the present disclosure. Clearly, the described embodiments are only a part of the present disclosure, rather than all embodiments.

In the following examples, the molecular weight of polyethylene glycol involved refers to the number average molecular weight of polyethylene glycol.

### Example 1

### 1. Preparation of positive electrode sheet

The positive electrode slurry is prepared according to the following method: the ternary positive electrode active material NCM532, conductive agent acetylene black, and binder PVDF are added to a vacuum mixer for mixing in a mass ratio of ternary positive electrode active material NCM532: conductive agent acetylene black: binder PVDF=96:2: 2. Then a solvent NMP is added to the mixed slurry, and the mixed slurry is stirred under the action of a vacuum mixer until the slurry is uniform, thereby obtaining the positive electrode slurry of this embodiment.

The above positive electrode slurry is evenly coated on two surfaces of the positive electrode current collector aluminum foil, and dried at room temperature, transferred to an oven to continue drying, and dried in the oven to obtain a semi-finished positive electrode sheet. Then the semi-finished positive electrode sheet is cold-pressed and cut to obtain the positive electrode sheet to be assembled.

### 2. Preparation of negative electrode sheet

Negative electrode active material graphite, conductive agent acetylene black, sodium carboxymethyl cellulose, styrene-butadiene latex, and polyethylene glycol are added in the vacuum mixer for mixing in a mass ratio of negative electrode active material graphite: conductive agent acetylene black: sodium carboxymethyl cellulose: styrene-butadiene latex: polyethylene glycol=96.2:1:1.2:1.4:0.2. The molecular weight of the polyethylene glycol adopted by the present embodiment is 200, then a solvent deionized water is added to the mixed slurry. The mixed slurry is stirred under the action of the vacuum mixer until the slurry is uniform, thereby obtaining the negative electrode slurry of this embodiment.

The above-mentioned negative electrode slurry is evenly coated on two surfaces of the negative electrode current collector copper foil, dried at room temperature, transferred to an oven to continue drying, and a semi-finished negative electrode sheet is obtained after drying in the oven. Then the semi-finished negative electrode sheet is cold-pressed and cut to obtain the negative electrode sheet to be assembled.

### 3. Preparation of electrolyte

Ethylene carbonate (EC), ethyl methyl carbonate (EMC) and diethyl carbonate (DEC) are mixed according to the volume ratio EC:EMC:DEC=1:1:1 to obtain an organic solvent, and then fully dried lithium salt LiPF₆ is dissolved in the above organic solvent, and the electrolyte solution with a concentration of 1mol/L is prepared.

### 4. Selection of isolation film

In this embodiment, polyethylene film is selected as the isolation film of the lithium-ion battery.

### 5. Assembly of lithium-ion battery

The above-mentioned positive electrode sheet to be assembled, the isolation film, and the negative electrode sheet to be assembled are stacked in sequence, so that the isolation film is placed between the positive and negative electrode sheets to serve the function of isolation, and then the bare cell is manufactured by winding. The bare cell is placed in the battery housing, after drying, the electrolyte is injected, and processes such as vacuum packaging, standing, forming, and shaping are carried out to obtain the lithium-ion battery to be tested.

### Example 2

In this example, a lithium-ion battery is prepared with reference to the method provided in Example 1. The only difference between this example and Example 1 is the preparation of negative electrode sheet, the preparation method of negative electrode sheet of this embodiment is as follows:
Negative electrode slurry is prepared according to the following method: Negative electrode active material graphite, conductive agent acetylene black, sodium carboxymethyl cellulose, styrene-butadiene latex, and polyethylene glycol are added in the vacuum mixer for mixing in a mass ratio of negative electrode active material graphite: conductive agent acetylene black: sodium carboxymethyl cellulose: styrene-butadiene latex: polyethylene glycol=96.0:1:1.2:1.4:0.4. The molecular weight of the polyethylene glycol adopted in the present embodiment is 200, then the solvent deionized water is added to the mixed slurry, and the mixed slurry is stirred under the action of a vacuum mixer until the slurry is uniform, thereby obtaining the negative electrode slurry of this embodiment.

The above-mentioned negative electrode slurry is evenly coated on two surfaces of the negative electrode current collector copper foil, dried at room temperature, transferred to an oven to continue drying, and a semi-finished negative electrode sheet is obtained after drying in the oven. Then the semi-finished negative electrode sheet is cold-pressed and cut to obtain the negative electrode sheet to be assembled.

The preparation of the positive electrode sheet, the preparation of the electrolyte, the selection of the isolation film, and the assembly of the lithium-ion battery involved in this example are all consistent with those of Example 1, thereby obtaining the lithium-ion battery of this example.

### Example 3

In this example, a lithium-ion battery is prepared with reference to the method provided in Example 1. The only difference between this example and Example 1 is the preparation of negative electrode sheet, and the preparation method of the negative electrode sheet of this embodiment is as follows:
Negative electrode active material graphite, conductive agent acetylene black, sodium carboxymethyl cellulose, styrene-butadiene latex, and polyethylene glycol are added in the vacuum mixer for mixing in a mass ratio of negative electrode active material graphite: conductive agent acetylene black: sodium carboxymethyl cellulose: styrene-butadiene latex: polyethylene glycol=95.8:1:1.2:1.4:0.6. The molecular weight of the polyethylene glycol adopted in the present embodiment is 200, then the solvent deionized water is added in mixed slurry. The mixed slurry is stirred under the action of the vacuum mixer until the slurry is uniform, thereby obtaining the negative electrode slurry of this embodiment.

The above-mentioned negative electrode slurry is evenly coated on two surfaces of the negative electrode current collector copper foil, dried at room temperature, transferred to an oven to continue drying, and a semi-finished negative electrode sheet is obtained after drying in the oven. Then the semi-finished negative electrode sheet is cold-pressed and cut to obtain the negative electrode sheet to be assembled.

The preparation of the positive electrode sheet, the preparation of the electrolyte, the selection of the isolation film, and the assembly of the lithium-ion battery involved in this example are all consistent with those of Example 1, thereby obtaining the lithium-ion battery of this example.

### Example 4

In this example, a lithium-ion battery is prepared with reference to the method provided in Example 1. The only difference between this example and Example 1 is the preparation of negative electrode sheet, and the preparation method of the negative electrode sheet of this embodiment is as follows:
Negative electrode active material graphite, conductive agent acetylene black, sodium carboxymethyl cellulose, styrene-butadiene latex, and polyethylene glycol are added in the vacuum mixer for mixing in a mass ratio of negative electrode active material graphite: conductive agent acetylene black: sodium carboxymethyl cellulose: styrene-butadiene latex: polyethylene glycol=96.1:1:1.2:1.4:0.3. The molecular weight of the polyethylene glycol adopted in the present embodiment is 200, then the solvent deionized water is added in the mixed slurry, and the mixed slurry is stirred under the action of the vacuum mixer until the slurry is uniform, thereby obtaining the negative electrode slurry of this embodiment.

The above-mentioned negative electrode slurry is evenly coated on two surfaces of the negative electrode current collector copper foil, dried at room temperature, transferred to an oven to continue drying, and a semi-finished negative electrode sheet is obtained after drying in the oven. Then the semi-finished negative electrode sheet is cold-pressed and cut to obtain the negative electrode sheet to be assembled.

The preparation of the positive electrode sheet, the preparation of the electrolyte, the selection of the isolation film, and the assembly of the lithium-ion battery involved in this example are all consistent with those of Example 1, thereby obtaining the lithium-ion battery of this example.

### Example 5

In this example, a lithium-ion battery is prepared with reference to the method provided in Example 1. The only difference between this example and Example 1 is the preparation of negative electrode sheet, and the preparation method of the negative electrode sheet of this embodiment is as follows:
Negative electrode active material graphite, conductive agent acetylene black, sodium carboxymethyl cellulose, styrene-butadiene latex, and polyethylene glycol are added in the vacuum mixer for mixing in a mass ratio of negative electrode active material graphite: conductive agent acetylene black: sodium carboxymethyl cellulose: styrene-butadiene latex: polyethylene glycol=95.9:1:1.2:1.4:0.5. The molecular weight of the polyethylene glycol adopted in the present embodiment is 200, then the solvent deionized water is added in the mixed slurry, and the mixed slurry is stirred under the action of the vacuum mixer until the slurry is uniform, thereby obtaining the negative electrode slurry of this embodiment.

The above-mentioned negative electrode slurry is evenly coated on two surfaces of the negative electrode current collector copper foil, dried at room temperature, transferred to an oven to continue drying, and a semi-finished negative electrode sheet is obtained after drying in the oven. Then the semi-finished negative electrode sheet is cold-pressed and cut to obtain the negative electrode sheet to be assembled.

The preparation of the positive electrode sheet, the preparation of the electrolyte, the selection of the isolation film, and the assembly of the lithium-ion battery involved in this example are all consistent with those of Example 1, thereby obtaining the lithium-ion battery of this example.

### Example 6

In this example, a lithium-ion battery is prepared with reference to the method provided in Example 2. The only difference between this example and Example 2 is the preparation of negative electrode sheet, and the preparation method of the negative electrode sheet of this embodiment is as follows:
Negative electrode active material graphite, conductive agent acetylene black, sodium carboxymethyl cellulose, styrene-butadiene latex, and polyethylene glycol are added in the vacuum mixer for mixing in a mass ratio of negative electrode active material graphite: conductive agent acetylene black: sodium carboxymethyl cellulose: styrene-butadiene latex: polyethylene glycol=96.0:1:1.2:1.4:0.4. The molecular weight of the polyethylene glycol adopted in the present embodiment is 300, then the solvent deionized water is added in the mixed slurry, and the mixed slurry is stirred under the action of the vacuum mixer until the slurry is uniform, thereby obtaining the negative electrode slurry of this embodiment.

The above-mentioned negative electrode slurry is evenly coated on two surfaces of the negative electrode current collector copper foil, dried at room temperature, transferred to an oven to continue drying, and a semi-finished negative electrode sheet is obtained after drying in the oven. Then the semi-finished negative electrode sheet is cold-pressed and cut to obtain the negative electrode sheet to be assembled.

The preparation of the positive electrode sheet, the preparation of the electrolyte, the selection of the isolation film, and the assembly of the lithium-ion battery involved in this example are all consistent with those of Example 2, thereby obtaining the lithium-ion battery of this example.

### Example 7

In this example, a lithium-ion battery is prepared with reference to the method provided in Example 2. The only difference between this example and Example 2 is the preparation of negative electrode sheet, and the preparation method of the negative electrode sheet of this embodiment is as follows:
Negative electrode active material graphite, conductive agent acetylene black, sodium carboxymethyl cellulose, styrene-butadiene latex, and polyethylene glycol are added in the vacuum mixer for mixing in a mass ratio of negative electrode active material graphite: conductive agent acetylene black: sodium carboxymethyl cellulose: styrene-butadiene latex: polyethylene glycol=96.0:1:1.2:1.4:0.4. The molecular weight of the polyethylene glycol adopted in the present embodiment is 400, then the solvent deionized water is added in the mixed slurry, and the mixed slurry is stirred under the action of the vacuum mixer until the slurry is uniform, thereby obtaining the negative electrode slurry of this embodiment.

The above-mentioned negative electrode slurry is evenly coated on two surfaces of the negative electrode current collector copper foil, dried at room temperature, transferred to an oven to continue drying, and a semi-finished negative electrode sheet is obtained after drying in the oven. Then the semi-finished negative electrode sheet is cold-pressed and cut to obtain the negative electrode sheet to be assembled.

The preparation of the positive electrode sheet, the preparation of the electrolyte, the selection of the isolation film, and the assembly of the lithium-ion battery involved in this example are all consistent with those of Example 2, thereby obtaining the lithium-ion battery of this example.

### Example 8

In this example, a lithium-ion battery is prepared with reference to the method provided in Example 2. The only difference between this example and Example 2 is the preparation of negative electrode sheet, and the preparation method of the negative electrode sheet of this embodiment is as follows:
Negative electrode active material graphite, conductive agent acetylene black, sodium carboxymethyl cellulose, styrene-butadiene latex, and polyethylene glycol are added in the vacuum mixer for mixing in a mass ratio of negative electrode active material graphite: conductive agent acetylene black: sodium carboxymethyl cellulose: styrene-butadiene latex: polyethylene glycol=96.0:1:1.2:1.4:0.4. The molecular weight of the polyethylene glycol adopted in the present embodiment is 600, then the solvent deionized water is added in the mixed slurry, and the mixed slurry is stirred under the action of the vacuum mixer until the slurry is uniform, thereby obtaining the negative electrode slurry of this embodiment.

The above-mentioned negative electrode slurry is evenly coated on two surfaces of the negative electrode current collector copper foil, dried at room temperature, transferred to an oven to continue drying, and a semi-finished negative electrode sheet is obtained after drying in the oven. Then the semi-finished negative electrode sheet is cold-pressed and cut to obtain the negative electrode sheet to be assembled.

The preparation of the positive electrode sheet, the preparation of the electrolyte, the selection of the isolation film, and the assembly of the lithium-ion battery involved in this example are all consistent with those of Example 2, thereby obtaining the lithium-ion battery of this example.

### Example 9

In this example, a lithium-ion battery is prepared with reference to the method provided in Example 2. The only difference between this example and Example 2 is the preparation of negative electrode sheet, and the preparation method of the negative electrode sheet of this embodiment is as follows:
Negative electrode active material graphite, conductive agent acetylene black, sodium carboxymethyl cellulose, polyacrylonitrile, and polyethylene glycol are added in the vacuum mixer for mixing in a mass ratio of negative electrode active material graphite: conductive agent acetylene black: sodium carboxymethyl cellulose: polyacrylonitrile: polyethylene glycol=96.0:1:1.2:1.4:0.4. The molecular weight of the polyethylene glycol adopted in the present embodiment is 200, then the solvent deionized water is added in the mixed slurry, and the mixed slurry is stirred under the action of the vacuum mixer until the slurry is uniform, thereby obtaining the negative electrode slurry of this embodiment.

The above-mentioned negative electrode slurry is evenly coated on two surfaces of the negative electrode current collector copper foil, dried at room temperature, transferred to an oven to continue drying, and a semi-finished negative electrode sheet is obtained after drying in the oven. Then the semi-finished negative electrode sheet is cold-pressed and cut to obtain the negative electrode sheet to be assembled.

The preparation of the positive electrode sheet, the preparation of the electrolyte, the selection of the isolation film, and the assembly of the lithium-ion battery involved in this example are all consistent with those of Example 2, thereby obtaining the lithium-ion battery of this example.

### Example 10

In this example, a lithium-ion battery is prepared with reference to the method provided in Example 2. The only difference between this example and Example 2 is the preparation of negative electrode sheet, and the preparation method of the negative electrode sheet of this embodiment is as follows:
Negative electrode active material graphite, conductive agent acetylene black, sodium carboxymethyl cellulose, polyimide, and polyethylene glycol are added in the vacuum mixer for mixing in a mass ratio of negative electrode active material graphite: conductive agent acetylene black: sodium carboxymethyl cellulose: polyimide: polyethylene glycol=96.0:1:1.2:1.4:0.4. The molecular weight of the polyethylene glycol adopted in the present embodiment is 200, then the solvent deionized water is added in the mixed slurry, and the mixed slurry is stirred under the action of the vacuum mixer until the slurry is uniform, thereby obtaining the negative electrode slurry of this embodiment.

The above-mentioned negative electrode slurry is evenly coated on two surfaces of the negative electrode current collector copper foil, dried at room temperature, transferred to an oven to continue drying, and a semi-finished negative electrode sheet is obtained after drying in the oven. Then the semi-finished negative electrode sheet is cold-pressed and cut to obtain the negative electrode sheet to be assembled.

The preparation of the positive electrode sheet, the preparation of the electrolyte, the selection of the isolation film, and the assembly of the lithium-ion battery involved in this example are all consistent with those of Example 2, thereby obtaining the lithium-ion battery of this example.

### Comparative example 1

In this example, a lithium-ion battery is prepared with reference to the method provided in Example 1. The only difference between this example and Example 1 is the preparation of negative electrode sheet, and the preparation method of the negative electrode sheet of this embodiment is as follows:
The negative electrode slurry is prepared according to the following method. Negative electrode active material graphite, conductive agent acetylene black, sodium carboxymethyl cellulose, styrene-butadiene latex, and polyethylene glycol are added in the vacuum mixer for mixing in a mass ratio of negative electrode active material graphite: conductive agent acetylene black: sodium carboxymethyl cellulose: styrene-butadiene latex: polyethylene glycol=963:1:1.2:1.4:0.1. The molecular weight of the polyethylene glycol adopted in the present embodiment is 200, then the solvent deionized water is added in the mixed slurry, and the mixed slurry is stirred under the action of the vacuum mixer until the slurry is uniform, thereby obtaining the negative electrode slurry of this embodiment.

The above-mentioned negative electrode slurry is evenly coated on two surfaces of the negative electrode current collector copper foil, dried at room temperature, transferred to an oven to continue drying, and a semi-finished negative electrode sheet is obtained after drying in the oven. Then the semi-finished negative electrode sheet is cold-pressed and cut to obtain the negative electrode sheet to be assembled.

The preparation of the positive electrode sheet, the preparation of the electrolyte, the selection of the isolation film, and the assembly of the lithium-ion battery involved in this example are all consistent with those of Example 1, thereby obtaining the lithium-ion battery of this example.

### Comparative example 2

In this example, a lithium-ion battery is prepared with reference to the method provided in Example 1. The only difference between this example and Example 1 is the preparation of negative electrode sheet, and the preparation method of the negative electrode sheet of this embodiment is as follows:
The negative electrode slurry is prepared according to the following method. Negative electrode active material graphite, conductive agent acetylene black, sodium carboxymethyl cellulose, styrene-butadiene latex, and polyethylene glycol are added in the vacuum mixer for mixing in a mass ratio of negative electrode active material graphite: conductive agent acetylene black: sodium carboxymethyl cellulose: styrene-butadiene latex: polyethylene glycol=95.7:1:1.2:1.4:0.7. The molecular weight of the polyethylene glycol adopted in the present embodiment is 200, then the solvent deionized water is added in the mixed slurry, and the mixed slurry is stirred under the action of the vacuum mixer until the slurry is uniform, thereby obtaining the negative electrode slurry of this embodiment.

The above-mentioned negative electrode slurry is evenly coated on two surfaces of the negative electrode current collector copper foil, dried at room temperature, transferred to an oven to continue drying, and a semi-finished negative electrode sheet is obtained after drying in the oven. Then the semi-finished negative electrode sheet is cold-pressed and cut to obtain the negative electrode sheet to be assembled.

The preparation of the positive electrode sheet, the preparation of the electrolyte, the selection of the isolation film, and the assembly of the lithium-ion battery involved in this example are all consistent with those of Example 1, thereby obtaining the lithium-ion battery of this example.

### Comparative example 3

In this example, a lithium-ion battery is prepared with reference to the method provided in Example 2. The only difference between this example and Example 2 is the preparation of negative electrode sheet, and the preparation method of the negative electrode sheet of this embodiment is as follows:
The negative electrode slurry is prepared according to the following method. Negative electrode active material graphite, conductive agent acetylene black, sodium carboxymethyl cellulose, styrene-butadiene latex, and butanediol are added in the vacuum mixer for mixing in a mass ratio of negative electrode active material graphite: conductive agent acetylene black: sodium carboxymethyl cellulose: styrene-butadiene latex: butanediol=96.0:1:1.2:1.4:0.4. The solvent deionized water is added in the mixed slurry, and the mixed slurry is stirred under the action of the vacuum mixer until the slurry is uniform, thereby obtaining the negative electrode slurry of this embodiment.

The above-mentioned negative electrode slurry is evenly coated on two surfaces of the negative electrode current collector copper foil, dried at room temperature, transferred to an oven to continue drying, and a semi-finished negative electrode sheet is obtained after drying in the oven. Then the semi-finished negative electrode sheet is cold-pressed and cut to obtain the negative electrode sheet to be assembled.

The preparation of the positive electrode sheet, the preparation of the electrolyte, the selection of the isolation film, and the assembly of the lithium-ion battery involved in this example are all consistent with those of Example 2, thereby obtaining the lithium-ion battery of this example.

### Comparative example 4

In this example, a lithium-ion battery is prepared with reference to the method provided in Example 2. The only difference between this example and Example 2 is the preparation of negative electrode sheet, and the preparation method of the negative electrode sheet of this embodiment is as follows:
The negative electrode slurry is prepared according to the following method. Negative electrode active material graphite, conductive agent acetylene black, sodium carboxymethyl cellulose, styrene-butadiene latex, and ethylene glycol are added in the vacuum mixer for mixing in a mass ratio of negative electrode active material graphite: conductive agent acetylene black: sodium carboxymethyl cellulose: styrene-butadiene latex: ethylene glycol=96.0:1:1.2:1.4:0.4. The solvent deionized water is added in the mixed slurry, and the mixed slurry is stirred under the action of the vacuum mixer until the slurry is uniform, thereby obtaining the negative electrode slurry of this embodiment.

The above-mentioned negative electrode slurry is evenly coated on two surfaces of the negative electrode current collector copper foil, dried at room temperature, transferred to an oven to continue drying, and a semi-finished negative electrode sheet is obtained after drying in the oven. Then the semi-finished negative electrode sheet is cold-pressed and cut to obtain the negative electrode sheet to be assembled.

The preparation of the positive electrode sheet, the preparation of the electrolyte, the selection of the isolation film, and the assembly of the lithium-ion battery involved in this example are all consistent with those of Example 2, thereby obtaining the lithium-ion battery of this example.

### Comparative example 5

In this example, a lithium-ion battery is prepared with reference to the method provided in Example 2. The only difference between this example and Example 2 is the preparation of negative electrode sheet, and the preparation method of the negative electrode sheet of this embodiment is as follows:
Negative electrode active material graphite, conductive agent acetylene black, sodium carboxymethyl cellulose, styrene-butadiene latex, and polyethylene glycol are added in the vacuum mixer for mixing in a mass ratio of negative electrode active material graphite: conductive agent acetylene black: sodium carboxymethyl cellulose: styrene-butadiene latex: polyethylene glycol=96.0:1:1.2:1.4:0.4. The molecular weight of the polyethylene glycol adopted in the present embodiment is 800. Then the solvent deionized water is added in the mixed slurry, and the mixed slurry is stirred under the action of the vacuum mixer until the slurry is uniform, thereby obtaining the negative electrode slurry of this embodiment.

The above-mentioned negative electrode slurry is evenly coated on two surfaces of the negative electrode current collector copper foil, dried at room temperature, transferred to an oven to continue drying, and a semi-finished negative electrode sheet is obtained after drying in the oven. Then the semi-finished negative electrode sheet is cold-pressed and cut to obtain the negative electrode sheet to be assembled.

The preparation of the positive electrode sheet, the preparation of the electrolyte, the selection of the isolation film, and the assembly of the lithium-ion battery involved in this example are all consistent with those of Example 2, thereby obtaining the lithium-ion battery of this example.

### Comparative example 6

In this example, a lithium-ion battery is prepared with reference to the method provided in Example 1. The only difference between this example and Example 1 is the preparation of negative electrode sheet, and the preparation method of the negative electrode sheet of this embodiment is as follows:
The negative electrode slurry is prepared according to the following method. Negative electrode active material graphite, conductive agent acetylene black, sodium carboxymethyl cellulose, and styrene-butadiene latex are added in the vacuum mixer for mixing in a mass ratio of negative electrode active material graphite: conductive agent acetylene black: sodium carboxymethyl cellulose: styrene-butadiene latex=96.4:1:1.2:1.4. Then the solvent deionized water is added in the mixed slurry, and the mixed slurry is stirred under the action of the vacuum mixer until the slurry is uniform, thereby obtaining the negative electrode slurry of this embodiment.

The above-mentioned negative electrode slurry is evenly coated on two surfaces of the negative electrode current collector copper foil, dried at room temperature, transferred to an oven to continue drying, and a semi-finished negative electrode sheet is obtained after drying in the oven. Then the semi-finished negative electrode sheet is cold-pressed and cut to obtain the negative electrode sheet to be assembled.

The preparation of the positive electrode sheet, the preparation of the electrolyte, the selection of the isolation film, and the assembly of the lithium-ion battery involved in this example are all consistent with those of Example 1, thereby obtaining the lithium-ion battery of this example.

### Test example

1. Test object: The lithium-ion batteries prepared in Examples 1-10 and Comparative Examples 1-6 are used as the test objects of this test example, and relevant parameters and performance tests are carried out.
2. Test content:

### (1) Cycle performance test:

At 25°C, the lithium-ion battery as the test object is subjected to a cycle test according to the following procedure: fully charged at a rate of 1C, fully discharged until the capacity of the lithium-ion battery is less than 80% of the initial capacity, and the number of cycles is recorded.

### (2) DC resistance (DCR) test:

The lithium-ion battery as the test object is cycled to 200cls at 25°C, the lithium-ion battery is adjusted to 50% SOC, and discharged with a current of 1C rate for 18S. The battery voltage U2 and the current I before the discharge is stopped as well as the battery voltage U1 after the battery voltage is stabilized are recorded. Calculation is performed according to the formula R=(U2-U1)/I to obtain the DC internal resistance R.

### 3. Test result

The product parameters and performance test results of the test objects are shown in Table 1.

Examples 1 to 10 are added with polyethylene glycol to the negative electrode slurry used to form the negative electrode active coating in the process of preparing the negative electrode sheet. As a comparison of the above examples, Comparative Example 6 does not use polyethylene glycol in the process of preparing the negative electrode slurry, and the negative electrode sheets prepared in Examples 1 to 10 are not found to have dry cracking until the end of the test. However, the negative electrode sheet prepared in Comparative Example 6 is found to have obvious cracking in the process of the test. According to the performance test data listed in Table 1, compared with Comparative Example 1, the battery cycle performance corresponding to the negative electrode sheet prepared in Examples 1~10 is significantly improved, and the direct current resistance (DCR) level is significantly lower. Ion transport kinetics and DC resistance level are two important factors affecting battery fast charging. In the negative electrode active coatings prepared in Examples 1~10, the contained polyethylene glycol is able to absorb the electrolyte and swell. In this manner, it is possible to effectively improve the absorption and storage effect of the negative electrode sheet on the electrolyte, thereby reducing the liquid-phase transport impedance of the thick electrode, improving the transmission efficiency of lithium ions on the negative electrode sheet, thus reducing the liquid-phase transport impedance of the thick electrode, and improving the kinetics performance of lithium ion transport while reducing the DC resistance of the battery to which the negative electrode sheet is applied. In this manner, the battery using the negative electrode sheet has both good fast charging performance and battery cycle performance. In addition, polyethylene glycol is added in an appropriate amount in the negative electrode slurry, and polyethylene glycol may act as a plasticizer to improve the cracking phenomenon of the electrode sheet during the thick coating process and enhance the flexibility of the electrode sheet.

Examples 1~5 and Comparative Examples 1 and 2 all use polyethylene glycol with an average molecular weight of 200, and the variable between these examples and comparative examples is the amount of polyethylene glycol added to the negative electrode slurry. In Examples 1 to 5 and Comparative Example 1 and Comparative Example 2, the battery cycle stability corresponding to Example 2 is the best, and the DC resistance level is the lowest. It can be obtained that the optimal addition amount of polyethylene glycol with an average molecular weight of 200 in the negative electrode slurry is 0.4%. In contrast to Examples 1 to 5, the lithium-ion batteries prepared in Comparative Example 1 and Comparative Example 2 have relatively poor cycle performance and high DC resistance levels. In the product prepared in Comparative Example 1, the polyethylene glycol content in the negative electrode active coating of the lithium-ion battery is low (0.1 wt%), the plasticizing effect is poor, and there is no significant improvement in the ion transport impedance. The DC resistance level of the battery using the negative electrode is relatively high. In addition, in the test object provided in Comparative Example 1, electrode sheets are found dried and cracked, indicating that the flexibility of the negative electrode sheet provided in Comparative Example 1 is relatively poor, which results from the non-obvious plasticizing effect of the polyethylene glycol. However, in the product made in Comparative Example 2, the content of polyethylene glycol in the active coating of the negative electrode of the lithium-ion battery is relatively high (0.7 wt%), and the excessive polyethylene glycol is cross-linked with the binder in the negative electrode slurry. The cross-linking of the binder will lead to the deterioration of the bonding effect of some binders, which will adversely affect the long-term cycle performance of the battery.

In addition, compared with Example 2, Comparative Example 3 uses butanediol instead of polyethylene glycol to prepare the negative electrode slurry, and Comparative Example 4 uses ethylene glycol instead of polyethylene glycol to prepare the negative electrode slurry. Through data comparison, compared with Example 2, the cycle performance of the lithium-ion battery prepared in Comparative Example 3 is poor, and the DCR value is increased. In Comparative Example 3, butanediol is used as the negative electrode slurry additive, and the butanediol is basically removed after high-temperature baking in the process of coating the negative electrode slurry, and only serves a plasticizing effect. Compared with Comparative Example 6, although the addition of butanediol to the negative electrode slurry in Comparative Example 3 is able to solve the problem of dry cracking in the thick electrode processing process, it does not help much to reduce the DC resistance of the electrode sheet and improve the battery kinetics performance. Similarly, the lithium-ion battery prepared in Comparative Example 4 also presents a test result similar to that of Comparative Example 3, which shows that although ethylene glycol is used as a monomer of polyethylene glycol, for reducing the DC resistance of the electrode sheet and improving the kinetic performance of the battery, the functions served by ethylene glycol and polyethylene glycol make a significant difference.

The variable between Examples 2, 6~8 and Comparative Example 5 is that the molecular weight of the adopted polyethylene glycol makes a difference. In Examples 2, 6~8, the average molecular weight distribution of the adopted polyethylene glycol is between 200 and 600. As mentioned above, these electrode sheets have excellent battery cycle characteristics and low DC resistance level during the test process, and the lithium-ion battery prepared in Example 2 has the best overall performance. In comparison, in Comparative Example 5, the average molecular weight of the polyethylene glycol used to prepare the negative electrode slurry is as high as 800, and the polyethylene glycol with a high average molecular weight is difficult to disperse in the negative electrode active coating, resulting in uneven distribution of electrolyte in the negative electrode sheet, which hinders long-term cycle of the battery. On the other hand, the negative electrode sheet prepared in this Comparative Example is found dried and cracked during the test, and its corresponding DC resistance level is obviously high, even higher than the DC resistance level corresponding to Comparative Example 6 where polyethylene glycol is not used to prepare the negative electrode slurry. If the average molecular weight of polyethylene glycol in the negative electrode active coating of the negative electrode sheet is lower than 150, the liquid absorption and liquid retention capacity of polyethylene glycol is insufficient, which leads to limited improvement of the lithium ion transport kinetic performance of the negative electrode sheet. In summary, using polyethylene glycol with an average molecular weight of 150 to 600 to prepare negative electrode slurry helps to improve the cycle performance of the battery and reduce the DC resistance of the battery. However, if the average molecular weight of polyethylene glycol added to the negative electrode slurry is too high, it will increase the DC resistance level of the battery.

The variable between Examples 2, 9, and 10 is that the binder combination used to prepare the negative electrode slurry is different. As mentioned above, polyethylene glycol may interact with the binder in the negative electrode slurry. Therefore, the type of binder used in conjunction with polyethylene glycol will also have a certain impact on the performance of the lithium-ion battery to which it is applied. By comparing the test results corresponding to the above three examples, the comprehensive performance of the lithium-ion battery prepared in Example 2 is the best. It should be noted that, compared with Example 9 and Example 10, the direct current resistance level corresponding to Example 2 is obviously low, which shows that in the negative electrode slurry, the binder compounded with styrene-butadiene latex and sodium carboxymethyl cellulose has the best matching effect with polyethylene glycol.

**Table 1. Test results of Examples and Comparative examples**

| Test object | Content of polyethylene glycol in negative electrode slurry/% | Average molecular weight of polyethylene glycol | Binder combination in negative electrode slurry | Dry and cracked negative electrode sheet (cracked/not cracked) | Li-ion battery cycle performance/1000cls | DCR/Ω |
|---|---|---|---|---|---|---|
| Example 1 | 0.2 | 200 | SBR latex + sodium carboxymethyl cellulose | Not cracked | 88.5% | 28.0 |
| Example 2 | 0.4 | 200 | SBR latex + sodium carboxymethyl cellulose | Not cracked | 92.2% | 23.1 |
| Example 3 | 0.6 | 200 | SBR latex + sodium carboxymethyl cellulose | Not cracked | 88.8% | 27.3 |
| Example 4 | 0.3 | 200 | SBR latex + sodium carboxymethyl cellulose | Not cracked | 91.1% | 25.6 |
| Example 5 | 0.5 | 200 | SBR latex + sodium carboxymethyl cellulose | Not cracked | 90.6% | 26.4 |
| Example 6 | 0.4 | 300 | SBR latex + sodium carboxymethyl cellulose | Not cracked | 91.8 | 27.2 |
| Example 7 | 0.4 | 400 | SBR latex + sodium carboxymethyl cellulose | Not cracked | 90.4 | 26.7 |
| Example 8 | 0.4 | 600 | SBR latex + sodium carboxymethyl cellulose | Not cracked | 89.9 | 26.5 |
| Example 9 | 0.4 | 200 | Polyacrylonitrile + sodium carboxymethyl cellulose | Not cracked | 91.2% | 27.8 |
| Example 10 | 0.4 | 200 | Polyimide + sodium carboxymethyl cellulose | Not cracked | 90.7% | 28.3 |
| Comparative example 1 | 0.1 | 200 | SBR latex + sodium carboxymethyl cellulose | Not cracked | 87.1% | 29.8 |
| Comparative example 2 | 0.7 | 200 | SBR latex + sodium carboxymethyl cellulose | Not cracked | 84.4% | 31.6 |
| Comparative example 3 | None | - | SBR latex + sodium carboxymethyl cellulose | Not cracked | 88.2% | 30.9 |
| Comparative example 4 | None | - | SBR latex + sodium carboxymethyl cellulose | Not cracked | 87.6 | 30.4 |
| Comparative example 5 | 0.4 | 800 | SBR latex + sodium carboxymethyl cellulose | Not cracked | 85.7% | 32.7 |
| Comparative example 6 | None | - | SBR latex + sodium carboxymethyl cellulose | Not cracked | 85.6 | 31.8 |

## Claims

1. A negative electrode sheet, comprising: a current collector and a negative electrode active coating disposed on a surface of the current collector, wherein the negative electrode active coating contains polyethylene glycol, a molecular weight of the polyethylene glycol is 150∼660, and a proportion of the polyethylene glycol in the negative electrode active coating is not less than 0.2% calculated by mass percentage.

2. The negative electrode sheet according to claim 1, wherein the polyethylene glycol accounts for no more than 0.6% in the negative electrode active coating calculated by mass percentage.

3. The negative electrode sheet according to claim 2, wherein the polyethylene glycol accounts for 0.3%~0.5% in the negative electrode active coating calculated by mass percentage.

4. The negative electrode sheet according to claim 1, wherein the molecular weight of the polyethylene glycol is 180~220.

5. The negative electrode sheet according to claim 2, wherein the negative electrode active coating further comprises a binder, and a ratio of the binder: the polyethylene glycol is in a range of 5~7.5:1~3 calculated by mass ratio.

6. The negative electrode sheet according to claim 5, wherein the binder comprises at least one of polyacrylic acid, polyimide, polyvinyl alcohol, polyacrylonitrile, polyurethane, styrene-butadiene latex, and sodium carboxymethyl cellulose.

7. The negative electrode sheet according to claim 6, wherein the binder comprises styrene-butadiene latex and sodium carboxymethylcellulose.

8. The negative electrode sheet according to claim 5, wherein the negative electrode active coating further comprises a negative electrode active material and a conductive agent, wherein a ratio of the negative electrode active material: the conductive agent: the binder is in a range of 92∼97:0.3∼4.5:1.2∼3.5 calculated by mass ratio.

9. The negative electrode sheet according to claim 1, wherein a thickness of the negative electrode sheet is 120 µm~450 µm.

10. A battery, comprising a positive electrode sheet and the negative electrode sheet as claimed in any one of claim 1 to claim 9.
